# EUROPÄISCHE PATENTSCHRIFT

(11) **EP 0 573 865 B1**
(45) Veröffentlichungstag und Bekanntmachung des Hinweises auf die Patenterteilung: **25.10.1995**
(21) Anmeldenummer: 93108729.0
(22) Anmeldetag: 29.05.1993
(51) Int. Cl.: F16K 15/06, F04B 53/10

(54) **Rückschlagventil**
Check valve
Soupape de retenue

(30) Priorität: 11.06.1992 DE 9207827 U; 02.03.1993 DE 9302997 U
(43) Veröffentlichungstag der Anmeldung: 15.12.1993
(73) Patentinhaber: Jeromin, Karl, D-8860 Nördlingen (DE)
(72) Erfinder: Jeromin, Karl, D-8860 Nördlingen (DE)
(74) Vertreter: Munk, Ludwig, Dipl.-Ing.

(56) Entgegenhaltungen:
- EP-A- 0 167 964
- DE-A- 3 601 853
- DE-C- 211 646
- DE-C- 940 264
- GB-A- 1 052 423
- GB-A- 1 136 091
- US-A- 1 762 055
- US-A- 2 913 995
- US-A- 2 949 928
- US-A- 3 044 485

## Beschreibung

Die Erfindung betrifft ein Rückschlagventil gemäß dem Oberbegriff des Anspruchs 1.

Ein Rückschlagventil dieser Gattung ist aus der GB-A-1,052,423 bekannt. In dieser Anordnung ist ein senkrecht auf der Strömungsrichtung stehender Anschlagflansch für eine Druckfeder vorgesehen und strömt das Fluidum durch die Spiralen der pyramidenförmigen Druckfeder.

Hiervon ausgehend ist es Aufgabe der vorliegenden Erfindung, den Strömungswiderstand der Anordnung zu optimieren. Diese Aufgabe wird durch das Kennzeichen des Anspruchs 1 gelöst.

Die erfindungsgemäße Vorrichtung weist eine besonders einfache Bauweise auf, da das stationäre, ventilgehäuseseitige Organ der Anschlageinrichtung eine Doppelfunktion erfüllt, nämlich eine Anschlag- und eine Federabstützfunktion.

Mit den in einer erfindungsgemäßen Anordnung einsetzbaren Druckfedern, läßt sich eine kompakte Bauweise erreichen. Die Funktionssicherheit ist gegenüber der in der oben diskutierten, bekannten Anordnung verwendeten, pyramidenförmigen Druckfeder erhöht. Ein besonderer Vorteil ist darin zu sehen, daß die erfindungsgemäßen Maßnahmen auch eine sehr strömungsgünstige Anordnung ermöglichen und damit den Durchfluß optimieren, da der in der o.g. bekannten Vorrichtung eingesetzte Anschlag-Flansch auf der Innenseite des Gehäuses nicht mehr erforderlich ist. Das erfindungsgemäße Ventil eignet sich insbesondere als Zwischenventil.

Vorteilhafte Ausgestaltungen und zweckmäßige Fortbildungen der übergeordneten Maßnahmen sind in den Unteransprüchen angegeben und aus der nachstehenden Beispielsbeschreibung entnehmbar.

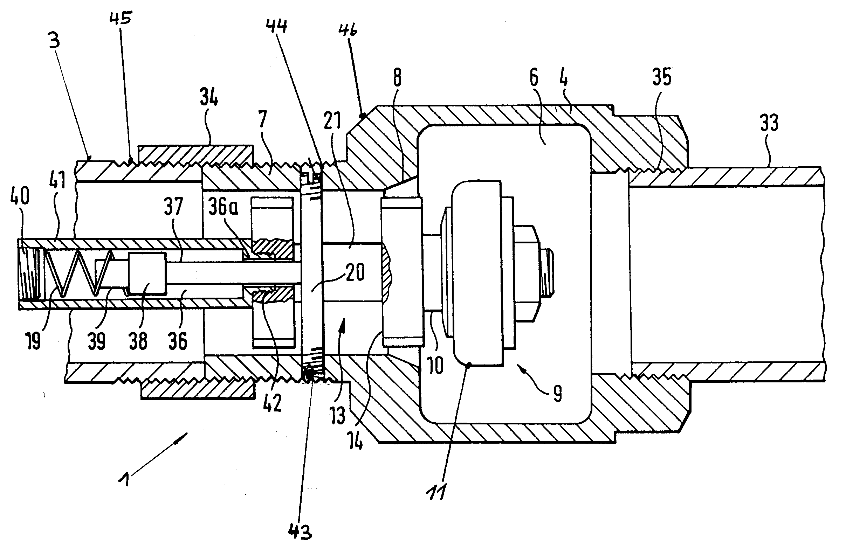

Nachstehend wird ein bevorzugtes Ausführungsbeispiel der Erfindung anhand der Zeichnung näher erläutert. Die einzige Figur der Zeichnung enthält einen Axialschnitt durch ein erfindungsgemäßes Rückschlagventil.

Das der Zeichnung zugrundeliegende, als Ganzes mit 1 bezeichnete Rückschlagventil ist zwischen zwei Abschnitten 3, 33 einer Flüssigkeitsleitung angeordnet. Das Rückschlagventil 1 kann dabei in stehender oder liegender oder geneigter Position angeordnet sein. Der Zeichnung liegt eine liegende Position zugrunde.

Das Rückschlagventil 1 enthält ein einteiliges Ventilgehäuse 4, das als ausgedrehtes Gußteil hergestellt werden kann. Der als durchgehende, umfangsmäßig abgestufte Bohrung ausgebildete Innenraum 6 des Ventilgehäuses 4 bildet einen durchgehenden Strömungsweg zwischen den beiden Leitungsabschnitten 3, 33, die mit dem Ventilgehäuse 4 verschraubt sind. Dieses ist mit einem dem Stromaufwärts vorgesehenen Leitungsabschnitt 3 zugewandten Kragen 7 versehen, der wie das benachbarte Ende des Leitungsabschnitts 3 mit einem Außengewinde 45 versehen ist. Die Stoßfuge zwischen Kragen 7 und Leitungsabschnitt 3 wird durch eine in die beiderseitigen Außengewinde eingreifende Verbindungsmuffe 34 überbrückt. Der gegenüberliegende Ausgang der Ventilgehäusebohrung ist mit einem Innengewinde 35 versehen, mit welchem das Ventilgehäuse 4 auf ein Außengewinde des Leitungsabschnitts 33 aufschraubbar ist. Die Gewinde 45, 35 besitzen gleichen Durchmesser, so daß auch Leitungsabschnitte 3, 33 gleichen Durchmessers anschließbar sind.

Das hier von links nach rechts durchströmte Ventilgehäuse 4 enthält einen seinen Innenraum 6 in zwei Bereiche unterteilenden Ventilsitz 8, dem ein entgegen der Strömungsrichtung hieran zur Anlage bringbarer Rückschlagkörper 9 zugeordnet ist. Dieser besteht aus einem als Metallteil ausgebildeten, schaftförmigen Träger 10, auf den ein aus Dichtungsmaterial, wie Gummi etc. bestehender Dichtring 11 aufgespannt ist, der mit dem Ventilsitz 8 zusammenwirkt. Der größte Durchmesser des als Ganzes mit 9 bezeichneten Rückschlagkörpers ist kleiner als der Innendurchmesser der mit dem Innengewinde 35 versehenen Gehäuseöffnung, so daß der Rückschlagkörper 9 über die genannte Gehäuseöffnung in das einteilige Ventilgehäuse 4 eingesetzt werden kann. Zur Bildung des Ventilsitzes 8 ist das Ventilgehäuse 4 mit einer umlaufenden Schulter 46 versehen, von der der Kragen 7 absteht.

Der schaftförmige Träger 10 des Rückschlagkörpers 9 ist mit einem in die Bohrung des gehäuseseitigen Kragens 7 hineinragenden, als Führungsorgan fungierenden Hals 13 versehen. Dieser ist mit radial auskragenden Führungsflügeln 14 bestückt, deren radial äußeren Flanken an der Innenwand des Kragens 7 geführt sind. Im dargestellten Beispiel sind zwei in axialer Richtung voneinander distanzierte Kränze von Führungsflügeln 14 vorgesehen.

Der Dichtring 11 des Rückschlagkörpers 9 wird durch die Flüssigkeitsströmung vom Ventilsitz 8 abgehoben und bei Wegfall der Strömung durch eine koaxial zur Achse des Rückschlagkörpers 9 angeordnete Schließfeder 19 zur Anlage am Ventilsitz 8 gebracht. Der Hub des Rückschlagkörpers 9 wird durch eine stromaufwärts vom Ventilsitz 8 angeordnete, durch ein ventilgehäuseseitiges, stationäres Element und durch ein rückschlagkörperseitiges, bewegliches Element gebildete Hubbegrenzungseinrichtung begrenzt. Diese enthält bei der dargestellten Anordnung einen den Kragen 7 diametral durchgreifenden Querstift 20 als stationäres Element und eine hiermit zusammenwirkende, rückschlagkörperseitige Fläche als bewegliches Element. Hierzu ist der Hals 13 mit einem vom Querstift 20 durchgriffenen Axialschlitz 21 versehen, dessen stromaufwärtsseitiges Ende als Anschlagfläche der Hubbegrenzungseinrichtung dient. Der Axialschlitz 21 befindet sich zwischen den beiden voneinander distanzierten Führungsflügelkränzen. Die Länge des Axialschlitzes 21 in axialer Richtung abzüglich des Durchmessers des Querstifts 20 ergibt den maximalen Hub des Rückschlagkörpers 9.

Der Querstift 20 ist an beiden Enden mit Gewindezapfen 43 versehen, die in zugeordnete, einander diametral gegenüberliegende, radiale Gewindebohrungen 44 des Kragens 7 so weit eingeschraubt sind, daß die Stirnflächen des Querstifts 20 sich innerhalb des Fußdurchmessers des Gewindes 45 befinden, so daß die Verbindungsmuffe 34 ungestört aufgeschraubt werden kann. Beim Zusammenbau des Rückschlagventils 1 wird zunächst der Rückschlagkörper 9 in das Ventilgehäuse 4 eingesetzt und anschließend der Querstift 20 montiert. Da dieser von außen einsetzbar ist, ergibt sich trotz einteiliger Ausgestaltung des Ventilgehäuses 4 ein einfacher Zusammenbau.

Die Schließfeder 19 ist als Druckfeder ausgebildet, die einerseits am Ventilgehäuse 4, hier am Querstift 20 der Hubbegrenzungseinrichtung, und andererseits am Rückschlagkörper 9, hier am rückwärtigen Ende des Halses 13, abgestützt ist. Im dargestellten Beispiel ist der Hals 13 mit einer in Schließrichtung vom Axialschlitz 21 abgehenden Aufnahmeausnehmung 36 für die Schließfeder 19 versehen. Diese wirkt mit einem ebenfalls in die Aufnahmeausnehmung 36 eingelegten Druckstift 37 zusammen, dessen schließfederfernes Ende am Querstift 20 anliegt. Das schließfedernahe Ende des Druckstifts 37 ist mit einem umlaufenden Bund 38 zur Bildung einer Federaufstandsfläche versehen. Der Bund 38 ist von einem in die als Zylinderfeder ausgebildete Schließfeder 19 eingreifenden Führungszapfen 39 überragt. Das vom Bund 38 abgewandte Federende liegt an der hier durch eine Madenschraube 40 gebildeten, rückwärtigen Begrenzung der Aufnahmeausnehmung 36 an. Die Madenschraube ermöglicht eine einfache Montage des Druckstifts 37 und der Schließfeder 19.

Die Aufnahmeausnehmung 36 besitzt die Konfiguration einer Stufenbohrung, deren vom Axialschlitz 21 abgehender Bereich 36a einen dem Schaft des Druckstifts 37 entsprechenden Durchmesser aufweist. Der hieran anschließende, weitere Bereich der Aufnahmeausnehmung 36 besitzt einen dem Bund 38 des Druckstifts 37 entsprechenden Durchmesser. Der Druckstift 37 ist dementsprechend zuverlässig beidseitig geführt, wodurch Verkantungsgefahr etc. ausgeschlossen ist.

Im dargestellten Beispiel ist der rückwärtige Bereich des Halses 13 des Rückschlagkörpers 9 als angesetzter Zylinder 41 ausgebildet, dessen Bohrung einen dem Durchmesser der Schließfeder 19 und des Bunds 38 angepaßten Durchmesser aufweist und über eine demgegenüber kleinere, einen dem Schaftdurchmesser des Druckstifts 37 angepaßten Durchmesser aufweisende Axialbohrung mit dem Axialschlitz 21 verbunden ist. Der Zylinder 41 kann angeformt oder angesetzt sein. Im dargestellten Beispiel ist der Zylinder 41 mit einem vom Schaft des Druckstifts 37 durchgriffenen Gewindezapfen 42 versehen.

## Patentansprüche

1. Rückschlagventil, insbesondere zur Verwendung als Zwischenventil in Leitungen, mit einem einen Strömungsweg enthaltenden, vorzugsweise einteiligen Ventilgehäuse (4) und einem in diesem koaxial zum Strömungsweg geführten, mit einem im Bereich des Strömungsweges angeordneten Ventilsitz (8) zusammenwirkenden Rückschlagkörper (9), der mittels einer als Druckfeder ausgebildeten Schließfeder (19) zur Anlage am zugeordneten Ventilsitz (8) bringbar ist und dessen Hub durch eine Hubbegrenzungseinrichtung begrenzbar ist, die ein im Bereich eines stromaufwärts vom Ventilsitz (8) verlaufenden, kragenförmigen Bereichs des Ventilgehäuses (4) vorgesehenes, stationäres Anschlagelement und ein mit diesem zusammenwirkendes, im Bereich eines in den kragenförmigen Gehäusebereich eingreifenden Halses (13) des Rückschlagkörpers (9) vorgesehenes Anschlagelement aufweist, **dadurch gekennzeichnet, daß** die Schließfeder (19) einerseits am ventilgehäuseseitigen Anschlagelement und andererseits an einer diesem rückschlagkörperanschlagelement-seitig gegenüberliegenden Fläche des Rückschlagkörpers (9) abgestützt ist, **daß** der Rückschlagkörper (9) im Bereich seines Halses (13) einen Axialschlitz (21) und der zugeordnete kragenförmige Bereich des Ventilgehäuses (4) einen lösbar festlegbaren, in den Axialschlitz (21) des Halses (13) eingreifenden Querstift (20) aufweisen und daß der Rückschlagkörper (9) mit einer in Schließrichtung vom Axialschlitz (21) abgehenden, axialen Aufnahmeausnehmung (36) für die Schließfeder (19) versehen ist, die sich einerseits am Querstift (20) und andererseits an der diesem gegenüberliegenden Wandung der Aufnahmeausnehmung abstützt.

2. Rückschlagventil nach Anspruch 1, **dadurch gekennzeichnet, daß** am Querstift (20) ein in einem zugeordneten Führungsbereich der Aufnahmeausnehmung (36) geführter Druckstift (37) anliegt, der mit einem als Federauflage dienenden Bund (38) versehen ist.

3. Rückschlagventil nach einem der vorhergehenden Ansprüche, **dadurch gekennzeichnet, daß** die Aufnahmeausnehmung (36) als rückwärtig mittels eines vorzugsweise als Madenschraube ausgebildeten Anschlags verschließbare Stufenbohrung ausgebildet ist.

4. Rückschlagventil nach Anspruch 3, **dadurch gekennzeichnet, daß** der Rückschlagkörper (9) einen angesetzten, rückwärtig verschließbaren Zylinder (41) aufweist, dessen Bohrung die Schließfeder (19) aufnimmt und über einen hiergegen verengten Bereich (36a) mit dem Axialschlitz (21) verbunden ist.

5. Rückschlagventil nach einem der vorhergehenden Ansprüche, **dadurch gekennzeichnet, daß** der Hals (13) des Rückschlagkörpers (9) mit der Innenwandung des zugeordneten Kragens (7) zusammenwirkende Führungsflügel (14), vorzugsweise zwei im Bereich der Enden des Axialschlitz (21) angeordnete Kränze von Führungsflügeln aufweist.

6. Rückschlagventil nach Anspruch 5, **dadurch gekennzeichnet, daß** die Führungsflügel (14) den Hals (13) und den in dessen Verlängerung vorgesehenen Zylinder (41) in radialer Richtung überragen.

7. Rückschlagventil nach einem der vorhergehenden Ansprüche, **dadurch gekennzeichnet, daß** der Ventilsitz (8) am stromabwärts gelegenen Ende des Kragens (7) angeordnet ist.

8. Rückschlagventil nach einem der vorhergehenden Ansprüche, **dadurch gekennzeichnet, daß** das Ventilgehäuse (4) kragenseitig mit einem Außengewinde (45) und gegenüberliegend mit einem Innengewinde (35) vorzugsweise gleichen Durchmessers versehen ist.

## Claims

1. Check valve, more especially for use as an intermediate valve in pipelines, having a valve housing (4), which contains a flow path and is preferably a one-piece construction, and a check body (9) which extends in said housing coaxially relative to the flow path and co-operates with a valve seat (8) disposed in the region of the flow path, said body being capable of being brought into abutment with the associated valve seat (8) by means of a locking spring (19), which is configured as a compression spring, and the stroke of said body being definable by a stroke limiting means comprising a stationary stop member, which is provided in the region of a collar-like portion of the valve housing (4) extending upstream of the valve seat (8), and a stop member, which co-operates with said stationary stop member and is provided in the region of a neck (13) of the check body (9) engaging in the collar-like housing portion, characterised in that the locking spring (19) is supported, at one end, on the stop member on the valve housing side and, at the other end, on a face of the check body (9) situated opposite said stop member on the check body stop member side, in that the check body (9) comprises an axial slot (21) in the region of its neck (13), and the associated collar-like portion of the valve housing (4) comprises a detachably securable transverse pin (20), which engages in the axial slot (21) of the neck (13), and in that the check body (9) is provided with an axial receiving recess (36), which extends from the axial slot (21) when viewed with respect to the closing direction, and serves to receive the locking spring (19), which is supported, at one end, on the transverse pin (20) and, at the other end, on the wall of the receiving recess situated opposite said pin.

2. Check valve according to claim 1, characterised in that a pressure pin (37), which is guided in an associated guide region of the receiving recess (36), abuts against the transverse pin (20) and is provided with a flange (38) which serves as a spring support.

3. Check valve according to one of the preceding claims, characterised in that receiving recess (36) is configured as a stepped bore, which is rearwardly lockable by means of a stop member preferably configured as a set-screw.

4. Check valve according to claim 3, characterised in that the check body (9) comprises an attached, rearwardly lockable cylinder (41), the bore of which accommodates the locking spring (19) and is connected to the axial slot 21 via a region (36a) which is constricted relative thereto.

5. Check valve according to one of the preceding claims, characterised in that the neck (13) of the check body (9) has guide vanes (14) which co-operate with the internal wall of the associated collar (7), preferably two rings of guide vanes disposed in the region of the ends of the axial slot (21).

6. Check valve according to claim 5, characterised in that the guide vanes (14) protrude in a radial direction beyond the neck (13) and the cylinder (41), which is provided in the extension of said neck.

7. Check valve according to one of the preceding claims, characterised in that the valve seat (8) is disposed at the downstream end of the collar (7).

8. Check valve according to one of the preceding claims, characterised in that the valve housing (4) is provided with an external thread (45) on the collar side and with an internal thread (35) on the oppositely situated side, said threads preferably having the same diameter.

## Revendications

1. Soupape de non-retour, en particulier pour être utilisée comme soupape intermédiaire dans des canalisations, comprenant un logement de soupape (4) de préférence en une seule pièce, contenant une voie d'écoulement, et un corps de retenue (9) guidé dans ce dernier en direction coaxiale par rapport à la voie d'écoulement, coopérant avec un siège de soupape (8) disposé dans la zone de la voie d'écoulement, qui peut venir se mettre en contact avec le siège de soupape correspondant (8) au moyen d'un ressort de fermeture (19) réalisé en forme de ressort de compression et dont la course peut être limitée par un mécanisme de limitation de course, qui présente un élément de butée stationnaire prévu dans la partie d'une zone du logement de soupape (4) en forme de collet s'étendant en amont du siège de soupape (8) et un élément de butée coopérant avec ce dernier, prévu dans la zone d'un collet (13) du corps de retenue (9) venant s'engrener dans la partie de logement en forme de collet, caractérisée en ce que le ressort de fermeture (19) s'appuie d'une part contre l'élément de butée côté logement de soupape et d'autre part contre une surface du corps de retenue (9) opposée au côté de cet élément de butée de corps de retenue, en ce que le corps de retenue (9) présente, dans la zone son collet (13), un fente axiale (21), et la zone correspondante en forme de collet du logement de soupape (4) présente une broche transversale (20) qui peut être fixée de manière amovible, venant s'engrener dans la fente axiale (21) du collet (13), et en ce que le corps de retenue (9) est muni d'un évidement axial (36) servant de logement pour le ressort de fermeture (19), s'éloignant de la fente axiale (21) dans le sens de la fermeture, qui s'appuie d'une part contre la broche transversale (20) et d'autre part contre la paroi de l'évidement servant de logement, opposée à cette dernière.

2. Soupape de non-retour selon la revendication 1, caractérisée en ce qu'une broche de pression (37) guidée dans une zone de guidage correspondante de l'évidement (36) servant de logement, vient s'appuyer contre la broche transversale (20), qui est munie d'un collet (38) servant de butée pour le ressort.

3. Soupape de non-retour selon l'une quelconque des revendications précédentes, caractérisée en ce que l'évidement (36) servant de logement est réalisé en forme d'alésage à gradin qui peut être fermé à l'arrière au moyen d'une butée réalisée de préférence en forme de vis sans tête.

4. Soupape de non-retour selon la revendication 3, caractérisée en ce que le corps de retenue (9) présente un cylindre (41) rajouté, qui peut être fermé à l'arrière, dont l'alésage sert de logement au ressort de fermeture (19) et qui est relié à la fente axiale (21) par l'intermédiaire d'une zone (36a) rétrécie par rapport à ce dernier.

5. Soupape de non-retour selon l'une quelconque des revendications précédentes, caractérisée en ce que le collet (13) du corps de non-retour (9) présente des ailes de guidage (14) coopérant avec la paroi interne du collet correspondant (7), de préférence deux couronnes d'ailes de guidage disposées dans la zone des extrémités de la fente axiale (21).

6. Soupape de non-retour selon la revendication 5, caractérisée en ce que les ailes de guidage (14) font saillie en direction radiale par rapport au collet (13) et au cylindre (41) prévu dans le prolongement de ce dernier.

7. Soupape de non-retour selon l'une quelconque des revendications précédentes, caractérisée en ce que le siège de soupape (8) est disposé à l'extrémité située en aval du collet (7).

8. Soupape de non-retour selon l'une quelconque des revendications précédentes, caractérisée en ce que le logement de soupape (4) est muni, côté collet, d'un filet externe (45) et, à l'opposé, d'un filet interne (35) de préférence de même diamètre.
